Europäisches Patentamt

European Patent Office

Office européen des brevets

(11) Veröffentlichungsnummer: **0 305 651**
**A1**

## (12) EUROPÄISCHE PATENTANMELDUNG

(21) Anmeldenummer: 88108393.5

(22) Anmeldetag: 26.05.88

(51) Int. Cl.⁴: **H04N 5/45 , H04N 5/262**

(30) Priorität: 01.09.87 DE 3729146

(43) Veröffentlichungstag der Anmeldung:
**08.03.89 Patentblatt 89/10**

(84) Benannte Vertragsstaaten:
**AT BE CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Fuchs, Hermann GRUNDIG E.M.V.**
**Max Grundig holländ.**
**Stiftung & Co KG Kurgartenstrasse 37**
**D-8510 Fürth/Bay.(DE)**

(54) **Gerät zum Anschluss an die Euro-AV-Buchse eines Fernsehempfängers.**

(57) Um mittels herkömmlicher Videosignalquellen auf dem Bildschirm eines nicht für die Bild-im-Bild-Funktion ausgerüsteten Fernsehempfängers mit Euro-AV-Buchse eine Bild-im-Bild-Darstellung zu erzeugen, wird ein Zusatzgerät (6) zwischen herkömmlichen Videosignalquellen und dem Fernsehempfänger (FS) geschaltet, welcher durch Auswertung von Fernbediensignalen und externen Synchronisiersignalen ein zur Einblendung in das Fernsehbild geeignetes Signal erzeugt, das dem Fernsehempfänger über dessen Euro-AV-Buchse (21) zugeführt wird.

EP 0 305 651 A1

# GERÄT ZUM ANSCHLUß AN DIE EURO-AV-BUCHSE EINES FERNSEHEMPFÄNGERS

Die Erfindung betrifft ein Gerät mit den im Oberbregriff des Anspruch 1 angegebenen Merkmalen.

Immer mehr neuere Fernsehempfänger weisen eine sogenannte Bild-im-Bild-Funktion auf. Mittels derartiger Fernsehempfänger können Bilder aus unterschiedlichen Signalquellen gleichzeitig auf dem Bildschirm des Fernsehempfängers dargestellt werden, wobei eines dieser Bilder als Hauptbild den überwiegenden Teil des Bildschirmes einnimmt und das andere als Nebenbild an einem vom Benutzer gewünschten Teil des Bildschirms (z.B. links unten, rechts oben, ...) in das Hauptbild eingeblendet wird.

Die oben genannten unterschiedlichen Signalquellen können beispielsweise zwei verschiedene, in das Gehäuse des Fernsehempfängers eingebaute Empfangsteile sein. Damit könnte der Benutzer als Hauptbild das Programm eines Fernsehkanals und als Nebenbild das Programm eines anderen Fernsehkanals auswählen.

Ferner kann als Hauptbild das Signal eines Fernsehkanals und als Nebenbild das Ausgangssignal einer externen Signalquelle, z.B. eines Videorecorders oder einer Fernsehkamera oder eines Heimcomputers, verwendet werden. Das Ausgangssignal der externen Signalquelle wird dem Fernsehempfänger über dessen Euro-AV-Buchse zugeführt und in der RGB-Ebene in das Hauptbild eingetastet.

Die Auswahl der Signalquellen erfolgt durch den Benutzer mittels einer Bedieneinheit.

Zur Bereitstellung des Nebenbildes wird ferner eine Signalverarbeitungsschaltung benötigt, die einen digitalen Bildspeicher enthält. Unter Verwendung dieses Bildspeichers wird die Zeilenzahl des Nebenbildes, z.B. durch Zusammenfassung mehrerer Zeilen oder durch Weglassen bestimmter Zeilen, derart verringert, daß ein zur Einblendung geeignetes Signal zur Verfügung steht.

Mittels herkömmlicher Video-Signalquellen und herkömmlicher, nicht für die Bild-im-Bild-Funktion ausgerüsteter Fernsehempfänger mit Euro-AV-Buchse, wie sie in sehr großer Stückzahl auf dem Markt sind, ist eine Bild-im-Bild-Darstellung auf dem Bildschirm des Fernsehempfängers nicht möglich.

Die Aufgabe der Erfindung besteht darin, ein Gerät anzugeben, mittels dessen Hilfe eine Bild-im-Bild-Darstellung auch bei Verwendung herkömmlicher Signalquellen und herkömmlicher, nicht für die Bild-im-Bild-Funktion ausgerüsteter Fernsehempfänger möglich wird.

Diese Aufgabe wird durch ein Gerät mit den im Patentanspruch 1 angegebenen Merkmalen gelöst.

Vorteilhafte Weiterbildungen ergeben sich aus den Unteransprüchen.

Die Vorteile der Erfindung bestehen insbesondere darin, daß weder Veränderungen am herkömmlichen Fernsehempfänger mit Euro-AV-Buchse noch Veränderungen an externen Signalquellen notwendig sind. Das beanspruchte Gerät kann in vorteilhafter Weise als Zusatzgerät bzw. Nachkaufgerät zwischen der Antenne bzw. den externen Signalquellen und der Euro-AV-Buchse des Fernsehempfängers eingesetzt werden.

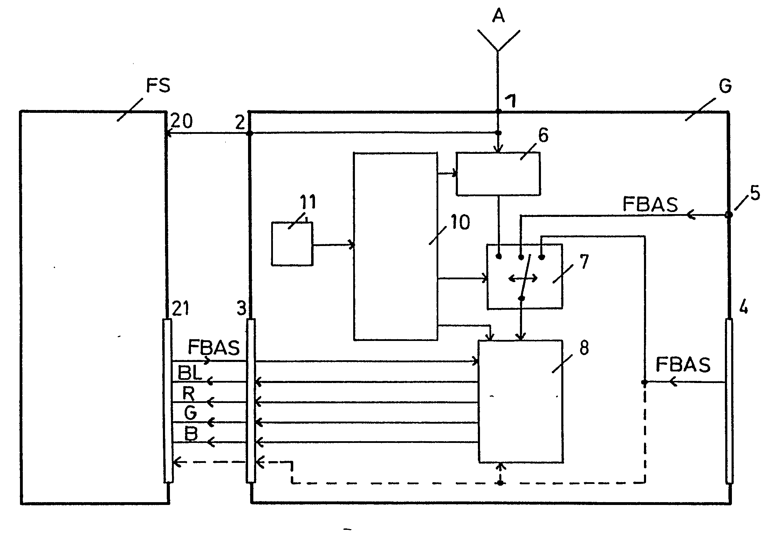

Weitere vorteilhafte Eigenschaften ergeben sich aus einem Ausführungsbeispiel, welches im folgenden anhand der einzigen Figur näher erläutert wird.

Das beanspruchte Gerät G ist über einen Antenneneingang 1 an eine Empfangsantenne A oder eine (nicht gezeichnete) Kabelübertragungstrecke angeschlossen. Ferner besitzt das Gerät G einen Antennenausgang 2, über den das Antennensignal dem Antennenanschluß 20 eines herkömmlichen Fernsehempfängers FS zugeführt wird. Der Antennenausgang 2 ist insbesondere deshalb vorteilhaft, weil in den Haushalten im Regelfall nur ein Antennenanschluß vorhanden ist. Weiterhin weist das Gerät G eine Euro-AV-Buchse 3 auf, die mit der Euro-AV-Buchse 21 des Fernsehempfängers FS verbunden ist. Außerdem sind im gezeigten Ausführungsbeispiel eine weitere Euro-AV-Buchse 4 und ein FBAS-Eingang 5 vorgesehen.

Das von der Antenne A angelieferte Signal wird einer Tuner- und ZF-Stufe 6 zugeführt und steht an deren Ausgang als FBAS-Signal zur Verfügung. Von dort aus gelangt es an einen Schalter 7, über den - je nach Schalterstellung - das FBAS-Signal vom Ausgang der Tuner-und ZF-Stufe 6, das FBAS-Signal vom Eingang 5, oder das FBAS-Signal von der Euro-AV-Buchse 4 an eine Normwandlerschaltung 8 weitergeleitet wird. In dieser Normwandlerschaltung 8 wird das angelieferte FBAS-Signal in ein zur Einblendung geeignetes RGB-Signal umgewandelt.

Die Normwandlerschaltung 8 weist hierzu u.a. einen Farbdecoder und einen Bildspeicher auf. Das Nebenbildsignal wird in der Schaltung 8 erzeugt, indem beispielsweise mehrere Zeilen zusammengefaßt bzw. interpoliert oder indem bestimmte Zeilen ausgelassen werden. Das erhaltene, zur Einblendung geeignete RGB-Signal wird der Euro-AV-Buchse 3 zugeführt.

Die Euro-AV-Buchse 3 des Gerätes G ist mit der Euro-AV-Buchse 21 des Fernsehempfängers FS verbunden.

Zur Steuerung der vorgenannten Vorgänge weist das Gerät G eine Steuerschaltung 10 auf, die einen Mikrocomputer enthält. Die Steuerschaltung 10 besitzt einen Eingang für die Signale von einem Fernbedienempfänger 11 un erzeugt Steuersignale für die oben beschriebenen Gerätekomponenten 6 und 8. Insbesondere erzeugt die Steuerschaltung 10 in Ansprache auf die Fernbediensignale auch Umschaltsteuersignale zur Signalquellenauswahl, die beispielsweise in der FBAS-Ebene (siehe Schalter 7) erfolgt und Steuersignale zur Plazierung der Einblendung auf den Bildschirm.

Die Funktionsweise des Gerätes G wird im folgenden beispielhaft beschrieben. Es sei angenommen, der Benutzer möchte als Hauptbild das Programm eines ersten Fernsehkanals und als Nebenbild das Programm eines zweiten Fernsehkanals auf dem Bildschirm des Fernsehempfängers FS darstellen, wobei das Nebenbild in der rechten unteren Ecke des Bildschirmes dargestellt werden soll.

Hierzu schaltet der Benutzer den Fernsehempfänger FS und das Gerät G ein. Anschließend wählt der Benutzer mittels eines (nicht gezeichneten) Fernbedienungsgebers das Programm des ersten Fernsehkanals aus. Die zur Darstellung der zugehörigen RGB-Signale auf dem Bildschirm notwendige Signalverarbeitung erfolgt im Fernsehempfänger unter Auswertung des dem Fernsehempfänger über seinen HF-Eingang 20 zugeführten Signals in herkömmlicher Weise und braucht deshalb nicht näher erläutert zu werden.

Weiterhin teilt der Benutzer entweder mittels desselben oder auch eines eigens für das Gerät G vorgesehenen Fernbedienungsgebers dem Gerät G mit, daß das Programm des zweiten Fernsehkanals in der rechten unteren Ecke des Bildschirms als Nebenbild dargestellt werden soll.

Die vom Benutzer über den Fernbedienungsgeber eingegebenen Befehle werden über den Fernbedienungsempfänger 11 des Gerätes G der Steuerschaltung 10 zugeführt und dort ausgewertet.

Insbesondere werden in der Steuerschaltung 10 Steuersignale für die Tuner- und ZF-Stufe 6 und den Umschalter 7 erzeugt, welche das am Antenneneingang 1 anliegende HF-Signal in das dem gewünschten zweiten Fernsehkanal entsprechende FBAS-Signal umsetzen.

Weiterhin werden in der Steuerschaltung 10 Steuer- bzw. Taktsignal für die Normwandlerschaltung 8 bzw. deren Bildspeicher erzeugt. Diese Steuer- bzw. Taktsignale enthalten ein Plazierungssignal, welches der Schaltung 8 Auskunft darüber gibt, an welcher Stelle des Bildschirms die Einblendung erfolgen soll. Ferner wird der Schaltung 8 über die Euro-AV-Buchsen 21 und 3 das im Fernsehempfänger FS erzeugte FBAS-Signal des ersten Kanals zugeführt. Aus diesem Signal werden die Synchronimpulse abgetrennt und zur Erzeugung eines Austastsignal BL und zur Steuerung der Erzeugung des einzublendenden RGB-Signals verwendet. Die in der Schaltung 8 erzeugten RGB-Signale und das Austastsignal BL werden an der Euro-AV-Buchse 3 des Gerätes G zur Verfügung gestellt und von dort aus der Euro-AV-Buchse 21 des Fernsehempfängers FS zugeführt.

Im Fernsehempfänger FS erfolgt dann unter Steuerung durch das Austastsignal BL in grundsätzlich bekannter Weise eine schnelle Umschaltung zwischen den im Fernsehempfänger als Hauptbild erzeugten RGB-Signalen des ersten Fernsehkanals und den im Gerät G als Nebenbild erzeugten RGB-Signalen des zweiten Fernsehkanals.

Selbstverständlich kann als Nebenbild auch ein von einer beliebigen anderen Signalquelle erzeugtes Videosignal ausgewählt werden. Dieses Signal kann dem Gerät G entweder als HF-Signal über seinen HF-Eingang 1 oder als FBAS-Signal über den Videoeingang 5 oder über die Euro-AV-Buchse 4 zugeführt werden.

Wie aus der obigen Beschreibung hervorgeht, kann damit unter Verwendung des beanspruchten Gerätes mittels jedes herkömmlichen Fernsehempfängers, welcher eine Euro-AV-Buchse besitzt, eine Bild-im-Bild-Funktion erzeugt werden.

Eine vorteilhafte Weiterbildung - die in der Figur gestrichelt angedeutet ist - besteht darin, innerhalb eines Gerätes G einen zusätzlichen Signalweg zur Verfügung zu stellen. Über diesen Signalweg könnte ein am Videosignaleingang 5 oder an der Euro-AV-Buchse 4 eingespeistes Videosignal durch das Gerät G "durchgeschleift" und als FBAS-Signal (einschließlich des zugehörigen Tonsignals) über die Euro-AV-Buchse 3 dem Fernsehempfänger FS zugeführt werden. Damit kann das Signal von einer externen Signalquelle als Hauptsignal auf dem Bildschirm des Fernsehempfängers dargestellt werden. Als Nebensignal könnte in diesem Fall ein beliebiges Ausgangssignal der Tuner- und ZF-Stufe 6 verwendet werden. Die erforderliche Synchronisierung müßte in diesem Fall in Abhängigkeit von den aus dem FBAS-Signal vom Eingang 4 bzw. 5 abgetrennten Synchronimpulsen erfolgen.

## Ansprüche

1. Gerät zum Anschluß an die Euro-AV-Buchse eines Fernsehempfängers, dadurch gekennzeichnet, daß es aufweist:
- einen Antenneneingangsanschluß (1),
- ein mit dem Antenneneingangsanschluß (1) verbundenes Tuner- und ZF-Teil (6),
- eine Normwandlerschaltung (8), die einen Bildspeicher enthält und die unter Auswertung von extern erzeugten Synchronsignalen in für die Einblendung in ein Fernsehbild des Fernsehempfängers geeignete RGB-Signale sowie ein Austastsignal (BL) erzeugt und diese an einer Euro-AV-Buchse (3) des Gerätes (G) zur Verfügung stellt, und
- eine Steuerschaltung (10), die unter Auswertung der Signale eines Bedienteiles eine Signalquellenumschaltung durchführt und Steuersignale für den Tuner- und ZF-Teil (6) und die Normwandlerschaltung (8) erzeugt.

2. Gerät nach Anspruch 1, dadurch gekennzeichnet, daß die Signalquellenumschaltung in der FBAS-Ebene erfolgt (Schalter 7).

3. Gerät nach Anspruch 1 oder 2, dadurch gekennzeichnet, daß es einen Antennenausgang (2) aufweist.

4. Gerät nach einem oder mehreren der Ansprüche 1 bis 3, dadurch gekennzeichnet, daß es mindestens eine weitere Euro-AV-Buchse (4) aufweist.

5. Gerät nach einem oder mehreren der Ansprüche 1 bis 4, dadurch gekennzeichnet, daß es mindestens einen Eingang (5) zur Zuführung eines FBAS-Signals aufweist.

EP 0 305 651 A1

| | EINSCHLÄGIGE DOKUMENTE | | EP 88108393.5 | |
|---|---|---|---|---|
| **Kategorie** | Kennzeichnung des Dokuments mit Angabe, soweit erforderlich, der maßgeblichen Teile | Betrifft Anspruch | KLASSIFIKATION DER ANMELDUNG (Int. Cl.4) | |
| Y | DE - A1 - 3 104 843 (LICENTIA) | 1 | H 04 N 5/45 | |
| A | * Fig. 2 * | 3 | H 04 N 5/262 | |
| | -- | | | |
| Y | FUNKSCHAU 26./1986, München | 1 | | |
| A | HELMUT MITSCHKE "Bild im Bild" Seiten 26-31 | 2 | | |
| | * Seite 26, Bild 1 * | | | |
| | ---- | | | |
| | | | **RECHERCHIERTE SACHGEBIETE (Int. Cl.4)** | |
| | | | H 04 N 5/00 | |
| | | | H 04 N 9/00 | |
| | Der vorliegende Recherchenbericht wurde für alle Patentansprüche erstellt. | | | |
| | Recherchenort | Abschlußdatum der Recherche | | Prüfer |
| | WIEN | 05-12-1988 | | BENISCHKA |